# EUROPEAN PATENT APPLICATION

(11) **EP 4 545 327 A1**
(43) Date of publication of application: **30.04.2025**
(21) Application number: 23206120.0
(22) Date of filing: 26.10.2023
(51) Int. Cl.: B60K 1/04, B60L 50/64, B60L 53/22

(54) **ELECTRONICS UNIT FOR A TRACTION BATTERY OF A VEHICLE, SEAT ASSEMBLY FOR A VEHICLE, VEHICLE, AND USE OF AN ELECTRONICS UNIT**

(71) Applicant: Volvo Car Corporation, 405 31 Göteborg (SE)
(72) Inventor: WALLBORG, Martin Hjälm, 40531 Göteborg (SE); KARLSSON, Daniel, 40531 Göteborg (SE); PERSSON, Klas, 40531 Göteborg (SE); LAND, Erik, 40531 Göteborg (SE); PETTERSSON, Dan, 40531 Göteborg (SE)
(74) Representative: Maiwald GmbH

(57) **Abstract**

The disclosure relates to an electronics unit (26) for a traction battery (12) of a vehicle (10). The electronics unit (26) comprises a housing (30). Moreover, the electronics unit (26) comprises at least one electronic control component and/or at least one power electronics component arranged inside the housing (30). Additionally, a mechanical connection interface for mechanically attaching a seat element (24) is provided on the housing (30). Furthermore, a seat assembly (22) for a vehicle (10) is shown. The seat assembly (22) comprises the seat element (24) and such an electronics unit (26). The seat element (24) is attached to the electronics unit (26) via the mechanical connection interface. Also, a vehicle (10) is presented. Additionally, a use of an electronics unit (26) for attaching a seat element (24) inside the vehicle (10) is explained.

## Description

### TECHNICAL FIELD

The present disclosure relates to an electronics unit for a traction battery of a vehicle. The electronics unit comprises a housing. Moreover, the electronics unit comprises at least one electronic control component and/or at least one power electronics component arranged inside the housing.

The present disclosure is also directed to a seat assembly for a vehicle.

Moreover, the present disclosure relates to a vehicle.

Additionally, the present disclosure is directed to a use of an electronics unit.

### BACKGROUND ART

A vehicle comprising a traction battery configured to provide electric energy for driving the vehicle may be called an electric vehicle.

Such vehicles usually comprise at least one electronics unit. The electronics unit may for example form part of an inverter unit. Additionally or alternatively, the electronics unit may form part of a so-called Battery Disconnect Unit (BDU) configured to disconnect the traction battery from remaining electric components of the vehicle if needed. It is also possible that the electronics unit forms part of a Battery Management System (BMS) configured to control the operation of the traction battery.

Within the vehicle, such an electronics unit occupies a certain amount of space which cannot be used for other functionalities of the vehicle, e.g. for parts of the traction battery and/or for passengers. Additionally, the electronics unit has a certain weight that adds to the vehicle's total weight, wherein the vehicle's total weight is one of the major influencing factors on a driving range of an electric vehicle. In this context, a comparatively high total weight is associated with a comparatively low driving range.

### SUMMARY

Therefore, it is an objective of the present disclosure to contribute to a reduction of the total weight of an electric vehicle. In doing so, a driving range shall be enhanced.

The problem is at least partially solved or alleviated by the subject matter of the independent claims of the present disclosure, wherein further examples are incorporated in the dependent claims.

According to a first aspect, there is provided an electronics unit for a traction battery of a vehicle. The electronics unit comprises a housing. Moreover, the electronics unit comprises at least one electronic control component and/or at least one power electronics component arranged inside the housing. A mechanical connection interface for mechanically attaching a seat element is provided on the housing. In this context, a housing is to be understood as a structural member enclosing and/or supporting the at least one electronic control component and/or the at least one power electronics component. The structural member is configured to support mechanical loads. A mechanical connection interface is to be understood as a means for mechanically connecting the housing to another element such as the seat element. The mechanical connection interface is configured to transfer mechanical loads from the housing to the other element and/or vice versa. The mechanical connection interface may be detachable or non-detachable, i.e. permanent. In case the mechanical connection interface is detachable, it may be manually detachable or detachable using an appropriate tool. In case the mechanical connection interface is non-detachable, it cannot be detached without damaging the housing, an element of the mechanical connection interface or the other element connected to the mechanical connection interface. According to an example, the mechanical connection interface is configured to transmit a tensile force and/or a compressive force. According to a further example, the mechanical connection interface may be configured to transmit a shear force. According to still another example, the mechanical connection interface is configured to transmit torques. In other words, the mechanical connection interface is configured to block one or more mechanical degrees of freedom associated with a relative movement of the housing and the other element, e.g. the seat element. Due to these characteristics of the mechanical connection interface, the housing may be used as a structural component of a vehicle in which the electronics unit is used, e.g. for mechanically supporting the seat element. Thus, the housing is not only used to protect and/or support the at least one electronic control component and/or the at least one power electronics component. Additionally, the mechanical stability of the housing is used for supporting other elements such as the seat element. This has the effect that other structural components of the vehicle may be reduced in size and weight or even eliminated completely. Altogether, the electronics unit enables a total weight reduction of the vehicle.

According to an example, the seat element may be cushion element. The cushion element may be a rear seat cushion element. Thus, using the electronics unit of the present disclosure, the cushion element, e.g. the rear seat cushion element, may be mounted inside the vehicle.

In an example, the mechanical connection interface comprises at least one hole configured to receive a bolt. Additionally or alternatively, the mechanical connection interface comprises at least one bolt configured to be received in a hole provided on the seat element. Mechanical connection interfaces comprising at least one hole and/or at least one bolt are structurally simple. Moreover, such connection interfaces are stable and reliable. Furthermore, establishing a mechanical connection using such a mechanical connection interface is comparatively simple and may be automated. Altogether, a mechanical connection interface comprising at least one hole and/or at least one bolt are a highly reliable and efficient way to connect an element, e.g. seat element, to the housing of the electronics unit.

According to a further example, the mechanical connection interface comprises two or more holes, wherein each hole is configured to receive a bolt. Additionally or alternatively, the mechanical connection interface comprises two or more bolts, wherein each bolt is configured to be received in a hole provided on the seat element. Using at least two holes and/or at least two bolts enhances the capability of the mechanical connection interface to transmit torques. This is due to the fact that one of the at least two holes and/or bolts blocks a relative rotation around the respective other one of the at least two holes and/or bolts. Moreover, providing at least two holes and/or at least two bolt enhances the stability of the mechanical connection interface, especially as compared to a connection interface comprising only one hole and/or only one bolt.

In case the mechanical connection interface comprises one or more bolts, the bolt may be provided with a thread. In this case, the mechanical connection interface may as well comprise one or more nuts, wherein one nut is associated with each bolt.

According to an example, the housing comprises an upper housing part and a lower housing part. The mechanical connection interface is provided on the lower housing part and/or on the upper housing part. In this context, the designation of the housing parts as upper housing part and lower housing part refers to an orientation of the housing during use of the electronics unit. Providing the mechanical connection interface on the upper housing part and/or the lower housing part allows for a stable mechanical connection between the housing and the seat element.

In an example, at least one of the upper housing part and the lower housing part is cup-shaped. In this case, the respective other housing part may be cup-shaped as well or plateshaped. In a case in which both the upper housing part and the lower housing part are cup-shaped, the housing parts may as well be designated as half-shells.

In an example, the power electronics component comprises an electric converter unit and/or a switching unit. The electric converter unit is for example an AC/DC converter or a DC/AC converter or a DC/DC converter. The electric converter unit may form part of a so-called onboard charger. The electric converter unit may as well be a combination of these types of converters. The switching unit may be a safety disconnector which is configured to selectively disconnect the traction battery from remaining electric components. The switching unit may comprise a fuse.

In an example, the electronics unit of the present disclosure is formed as a component of the battery pack. In this case, the at least one electronic control component and/or the at least one power electronics component arranged inside the housing may be configured to transfer a current, a measurement signal and/or a communication signal originating from a battery cell or being associated with the battery cell.

According to an example, the electronics unit of the present disclosure may form part of an inverter unit. Additionally or alternatively, the electronics unit may form part of a so-called Battery Disconnect Unit (BDU) configured to disconnect the traction battery from remaining electric components of the vehicle if needed. It is also possible that the electronics unit forms part of a Battery Management System (BMS) configured to control the operation of the traction battery.

In an example, the electronics unit further comprises a mechanical support structure configured to support loads originating from the seat element. The mechanical support structure is arranged inside the housing. Thus, in this example, mechanical loads are not only supported by the housing itself, but also by the mechanical support structure arranged inside the housing. This enhances the load-bearing capacity of the electronics unit. Moreover, a distribution of load-bearing capacities between the mechanical support structure arranged inside the housing and the housing may lead to a reduced weight of the electronics unit. This enables a comparatively low weight of a vehicle in which the electronics unit is used.

In an example, the mechanical support structure comprises the at least one electronic control component and/or the at least one power electronics component. This means that the at least one electronic control component and/or the at least one power electronics component is used to bear mechanical loads originating from the element, e.g. the seat element, connected to the electronics unit via the mechanical connection interface. In other words, the at least one electronic control component and/or the at least one power electronics component not only has an electric functionality but also a mechanical one. This allows to further reduce the weight of the electronics unit and/or to enhance the load-bearing capacity of the electronics unit. This also enables a comparatively low weight of a vehicle in which the electronics unit is used.

According to an example, the electronics unit further comprises an electric connection interface configured to connect the at least one electronic control component and/or the at least one power electronics component to a battery cell of the traction battery. Thus, the electronics unit may be electrically connected to the traction battery in a reliable manner.

According to an example, the battery cells may be located in a battery cell housing which is separate from the housing of the electronics component. However, the battery cell housing and the housing of the electronics unit may be mechanically connected. In this context, the battery cell housing may be configured to house a plurality of battery cells. The battery cell housing may comprise a bottom pan on which the plurality of battery cells may be supported. Additionally or alternatively, the battery cell housing may comprise a support frame holding the plurality of battery cells.

In an example, at least one battery cell of the traction battery is located in the housing. Thus, in this example, the housing of the electronics unit is a common housing for battery cells and the at least one electronic control component and/or the at least one power electronics component. In this context, a plurality of battery cells of the traction battery may be located in the housing. Thus, the common housing for battery cells and the at least one electronic control component and/or the at least one power electronics component may house the traction battery or may form the traction battery. The common housing may comprise a bottom pan on which the plurality of battery cells may be supported. Additionally or alternatively, the common housing may comprise a support frame holding the plurality of battery cells.

According to an example, the housing in which a plurality of battery cells and the at least one electronic control component and/or the at least one power electronics component are located is made by casting. In an example, the common housing is cast as one component. This may render the common housing compact and cost-efficient.

It is noted that the above-mentioned examples may be combined. Then, a portion of battery cells is located in a separate battery cell housing and a portion of battery cells is located in the common housing. In this context, the at least one electronic control component and/or the at least one power electronics component may be arranged on top the battery cells.

According to a second aspect, there is provided seat assembly for a vehicle. The seat assembly comprises a seat element and an electronics unit according to the present disclosure. The seat element is attached to the electronics unit via the mechanical connection interface of the electronics unit. Thus, the housing is used as a structural component for mechanically supporting the seat element. This has the effect that other structural components of the vehicle may be reduced in size and weight or even eliminated completely. Altogether, the electronics unit enables a total weight reduction of the vehicle.

In an example, the seat element is attached to the electronics unit using at least one bolt. Thus, the seat element is attached to the electronics unit in a structurally simple and reliable manner. Furthermore, establishing a mechanical connection using a bolt may be easily automated.

In an example, the seat assembly further comprises a spacer part wherein the spacer part is interposed between the electronics unit and the seat element. The spacer part may be used in order to bridge a geometric distance between the electronics unit and the seat element. To this end, at least one dimension of the spacer part, e.g. a height of the spacer part, needs to be adjusted to the desired geometric distance. Moreover, using the spacer part, different seat assemblies may be provided in a modular manner. This means that the same electronics unit and the same seat element may be used in combination with different spacer parts thereby adjusting a geometric distance between the electronics unit and the seat element.

According to an example, the spacer part is made from plastics, e.g. expanded polypropylene (EPP). Consequently, the spacer part may be produced in an efficient manner and has a comparatively low weight.

According to a third aspect, there is provided a vehicle. The vehicle comprises a traction battery. Moreover, the vehicle comprises an electronics unit according to the present disclosure and/or a seat assembly according to the present disclosure. The electronics unit and/or the seat assembly is electrically and/or communicatively coupled to the traction battery. Due to the fact that the housing is used as a structural component for mechanically supporting the seat element, other structural components of the vehicle may be reduced in size and weight or even eliminated completely. Consequently, such a vehicle has a comparatively low weight without compromising on mechanical stability.

In an example, the traction battery comprises a plurality of battery cells arranged in a battery cell housing. The battery cell housing forms at least a part of a vehicle floor. In this context, the battery cell housing may be formed integrally with the housing of the electronics unit. Alternatively, the battery cell housing and the housing of the electronics unit may be formed separately. In the latter case, the battery cell housing and the housing of the electronics unit may be mechanically connected. In all of these alternatives, forming at least a part of the vehicle floor by the battery cell housing allows to provide the battery cell housing in the vehicle in a space-saving manner. Put otherwise, the electronics unit and the plurality of battery cells may be arranged close to one another such that conductor lengths may be small. At the same time, this position of the battery cell housing allows to use the housing of the electronics unit as a mechanical support for a seat element. This may be done in a compact manner.

In an example, the traction battery is a structural battery. This means that the traction battery is configured to transfer and carry load occurring during use of the vehicle. Since the traction battery is a structural battery, other structural components of the vehicle may be reduced in size and/or weight or may be eliminated completely. This allows to provide a comparatively large battery in an electric vehicle while keeping the total weight of the electric vehicle comparatively low.

According to a fourth aspect, there is provided a use of an electronics unit for a traction battery of a vehicle. The electronics unit is used for attaching a seat element inside the vehicle. In other words, the electronics unit is used as a mechanical support for the seat element. This has the effect that other structural components of the vehicle may be reduced in size and weight or even eliminated completely. Altogether, the electronics unit enables a total weight reduction of the vehicle.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: schematically shows a vehicle according to the present disclosure comprising a seat assembly according to the present disclosure and an electronics unit according to the present disclosure, wherein the electronics unit is used for attaching a seat element inside the vehicle,
- Figure 2: shows a detail II of the vehicle of Figure 1 in a perspective view,
- Figure 3: shows a detail III of the vehicle of Figure 2,
- Figure 4: shows the same detail III as Figure 3, wherein a spacer element is not shown.
- Figure 5: shows a view comparable to Figure 2, wherein seat elements are eliminated,
- Figure 6: shows an underfloor unit of the vehicle of Figures 1 to 5 in an isolated view, wherein the electronics unit is represented in a partially transparent manner, and
- Figure 7: shows the underfloor unit of Figure 6 in a view along direction VII in Figure 6, wherein the electronics unit is represented in a partially transparent manner.

### DETAILED DESCRIPTION

The Figures are merely schematic representations and serve only to illustrate examples of the disclosure. Identical or equivalent elements are in principle provided with the same reference signs.

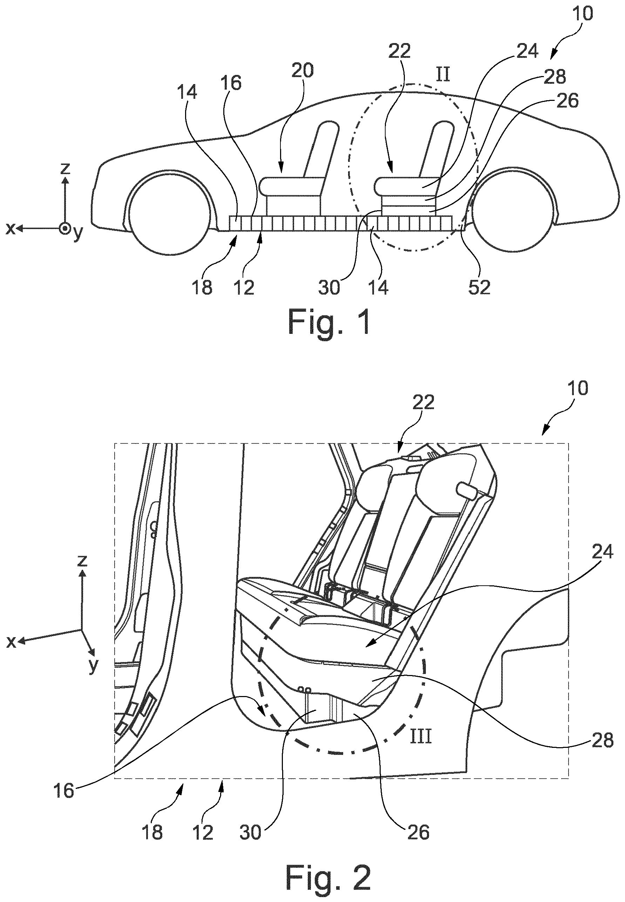

Figure 1 shows an electric vehicle 10 which will simply be called a vehicle 10 in the following.

The vehicle 10 comprises a traction battery 12 comprising a plurality of battery cells 14 arranged in a battery cell housing 16. For reasons of better visibility, only some of the battery cells 14 are equipped with a reference sign.

In the present example, the traction battery 12 is a structural battery forming part of an underfloor unit 18 of the vehicle 10. This means that the traction battery 12 is configured to bear loads occurring during use of the vehicle 10, e.g. in a crash situation. At the same time, a top side of the traction battery 12, more precisely a top side of the battery cell housing 16, forms an interior floor of the vehicle 10.

In an interior of the vehicle 10, there is provided a front seat assembly 28 and a rear seat assembly 22.

Since in the following, the focus will be placed on the rear seat assembly 22, the rear seat assembly 22 will be simply called seat assembly 22 for the case of explanation.

The seat assembly 22 comprises a seat element 24, which in the present example is a lower cushion element configured to support a portion of the legs and a bottom of a passenger.

Moreover, the seat assembly 22 comprises an electronics unit 26 and a spacer element 28.

The spacer element 28 is interposed between the electronics unit 26 and the seat element 24.

The electronics unit 26 comprises a housing 30.

In the present example, the housing 30 comprises two housing parts, wherein a lower housing part 32 is essentially cup-shaped and an upper housing part 34 is essentially cup-shaped. In other words, the lower housing part 32 and the upper housing part 34 form half-shells of the housing 30. In the present example, the lower housing part 32 is formed by casting and the upper housing part 34 is formed by sheet-metal forming.

The lower housing part 32 and the upper housing part 34 are attached to one another using a number of screws 36. For reasons of better visibility, only some of the screws 36 are equipped with a reference sign.

Additionally, the lower housing part 32 is mechanically connected to the battery cell housing 16. Also to this end, screws are used.

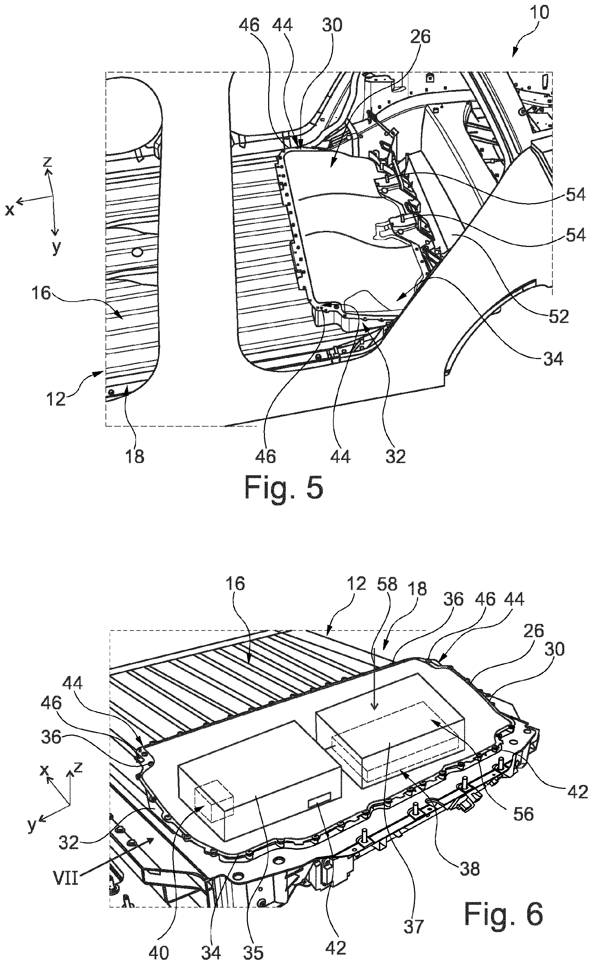

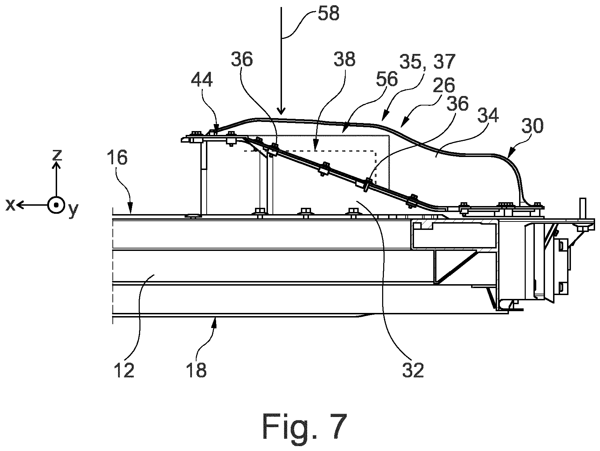

Inside the housing 30, there is provided a plurality of electronic control components. In Figures 6 and 7 one example electronic control component 35 is represented in a schematic manner. Moreover, a plurality of power electronics components are arranged in the housing 30. In Figures 6 and 7, one example power electronics components 37 is shown in a schematic manner. The power electronics component 37 comprises an electric converter unit 38 (cf. Figures 6 and 7).

Moreover, the power electronics components 37 comprise a switching unit 40 which is configured to electrically separate the battery cells 14 from the remaining electric components of the vehicle 10 if needed.

It is understood that the electric converter unit 38 and the switching unit 40 need to be electrically and/or communicatively connected to the battery cells 14. A corresponding electric connection interface is designated with reference sign 42.

More generally speaking, the electronics unit 26 is a so-called Battery Disconnect Unit (BDU) configured to disconnect the traction battery 12 from remaining electric components of the vehicle 10 if needed. Such BDUs are generally known and, thus, a more detailed explanation will be omitted.

The housing 30 of the electronics unit 26 additionally comprises a mechanical connection interface 44 for mechanically attaching the seat element 24.

In the present example, the mechanical connection interface 44 comprises two holes 46 which are provided on opposite lateral sides of the lower housing part 32.

Moreover, the mechanical connection interface 44 comprises two bolts 48 which are configured to extend through a corresponding hole in the seat element 24. Moreover, each of the bolts 48 is configured to extend through an associated one of the holes 46. To this end, the bolts 48 and the holes 46 may be threaded. However, it is also possible to provide holes 46 without the thread and use nuts in order to fix the bolt 48 inside the holes 46.

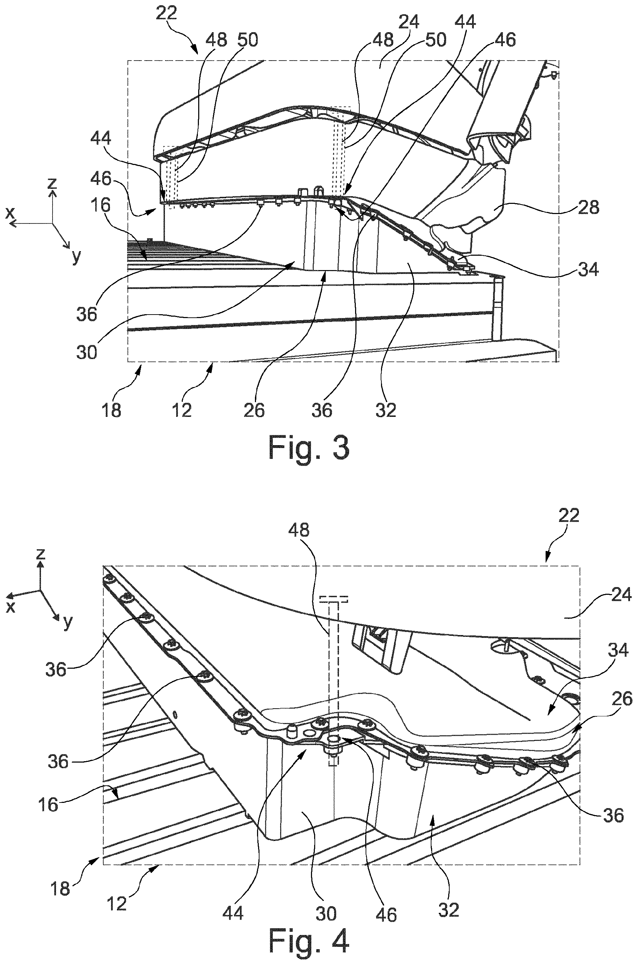

Since the spacer element 28 is interposed between the seat element 24 and the electronics unit 26, also the spacer element 28 comprises openings 50 configured to receive the bolts 48 (cf. Figures 2 to 4).

Thus, in the present example, the seat element 24 is mounted onto the electronics unit 26 using the mechanical connection interface 44 with the bolt 48 and holes 46.

This has the effect that the seat element 24 is mechanically supported on the electronics unit 26 along a negative Z-direction. In this direction, the mechanical support is provided via the spacer element 28 located on top of the electronics unit 26.

Moreover, the seat element 24 is mechanically supported on the electronics unit 26 along the positive z direction since it is held on the electronics unit 26 by the bolts 48.

Additionally, the seat element is mechanically supported on the electronics unit 26 along a positive and negative x direction as well as long a positive and negative y direction. This is due to the fact that the mechanical connection interface 44, more precisely the bolts 48 extending through holes in the seat element 24 and holes 46 on the housing 30 do not allow a relative movement of the seat element 24 along or against the x direction and along or against the y direction.

Furthermore, due to the fact that the bolts 48 are provided in separate locations, the seat element 24 is supported on the electronics unit 26 such that a relative rotation between these two elements is not possible.

Consequently, due to the connection via the mechanical connection interface 44, the seat element 24 is not able to move with respect to the electronics unit 26.

Nevertheless, in order to further enhance the stability of the connection of the seat element 24 inside the vehicle 10, the seat element 24 is also connected to a rear structure 52 of the vehicle 10 using two bolts 54 (cf. Figure 5).

In addition to the mechanical support of the seat element 24 by the housing 30, the seat element 24 may also mechanically supported by a mechanical support structure 56 arranged inside the housing 30 (cf. Figures 6 and 7, upper housing part 34 represented in transparent manner).

In the present example, the mechanical support structure 56 is formed by the electric converter unit 38. This means that the inherent mechanical stability of the electric converter unit 38 is used to mechanically support the seat element 24. This is the case in a crash situation as will be explained in the following.

A front crash of the vehicle 10 may have the effect that a passenger sitting on the seat assembly 22, i.e. on the seat element 24 is pushed downwards and rearwards, i.e. along the negative z direction. This is indicated by an arrow 58 in Figure 6 and 7. The passenger being pushed downwards results in a load being applied on the seat element 24. This load is also oriented downwards. As has been explained before, a part of the load will be supported by the housing 30. Moreover, another part of the load is supported by the mechanical support structure 56 arranged inside the housing 30. In the present example, the mechanical support structure 56 arranged inside the housing will only come into effect once the upper housing part 34 is deformed due to this load. In a deformed state of the upper housing part 34, the upper housing part 34 and the mechanical support structure 56 formed by the electric converter unit 38 are arranged at a distance.

Altogether, the electronics unit 26 is used for mechanically attaching the seat element 24 inside the vehicle 10 and for supporting loads resulting from the seat element 24.

It is noted that even though the present example has been explained in connection with the rear seat assembly 22, it is of course possible to use the teaching of the present disclosure in connection with any sort of seat assembly. This means that also a seat element 24 belonging to a front seat assembly or any other seat assembly may be mechanically supported on the electronics unit.

Due to the fact that the seat element 24 is mechanically supported on the electronics unit 26, further structures for supporting the seat element 24 inside the vehicle may be reduced in number or side or may be completely eliminated. Since such further structures occupy space within the vehicle and have a certain weight, using the electronics unit 26 for mechanically supporting the seat element 24 liberates space inside the vehicle and enables a weight reduction of the vehicle.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: electric vehicle
- 12: traction battery
- 14: battery cell
- 16: battery cell housing
- 18: underfloor unit
- 20: front seat assembly
- 22: rear seat assembly
- 24: seat element
- 26: electronics unit
- 28: spacer element
- 30: housing of the electronics unit
- 32: lower housing part
- 34: upper housing part
- 35: electronic control component
- 36: screw
- 37: power electronics component
- 38: electric converter unit
- 40: switching unit
- 42: electric connection interface
- 44: mechanical connection interface
- 46: hole
- 48: bolt
- 50: opening
- 52: rear structure
- 54: bolt
- 56: mechanical support structure
- 58: arrow

## Claims

1. An electronics unit (26) for a traction battery (12) of a vehicle (10), the electronics unit (26) comprising
a housing (30) and
at least one electronic control component (35) and/or at least one power electronics component (37) arranged inside the housing (30),
wherein a mechanical connection interface (44) for mechanically attaching a seat element (24) is provided on the housing (30).

2. The electronics unit (26) of claim 1, wherein the mechanical connection interface (44) comprises at least one hole (46) configured to receive a bolt (48) and/or at least one bolt (48) configured to be received in a hole provided on the seat element (24).

3. The electronics unit (26) of claim 1 or 2, wherein the housing (30) comprises an upper housing part (34) and a lower housing part (32),
wherein the mechanical connection interface (44) is provided on the lower housing part (32) and/or on the upper housing part (34).

4. The electronics unit (26) of any one of the preceding claims, wherein the power electronics component (37) comprises an electric converter unit (38) and/or a switching unit (40).

5. The electronics unit (26) of any one of the preceding claims, further comprising a mechanical support structure (56) configured to support loads originating from the seat element (24), wherein the mechanical support structure (56) is arranged inside the housing (30).

6. The electronics unit (26) of claim 5, wherein the mechanical support structure (56) comprises the at least one electronic control component (35) and/or the at least one power electronics component (37).

7. The electronics unit (26) of any one of the preceding claims, further comprising an electric connection interface (42) configured to connect the at least one electronic control component (35) and/or the at least one power electronics component (37) to a battery cell (14) of the traction battery (12).

8. The electronics unit (26) of any one of the preceding claims, wherein at least one battery cell (14) of the traction battery is located in the housing (30).

9. A seat assembly (22) for a vehicle (10), comprising a seat element (24) and an electronics unit (26) according to any one of the preceding claims, wherein the seat element (24) is attached to the electronics unit (26) via the mechanical connection interface (44) of the electronics unit (26).

10. The seat assembly (22) of claim 9, wherein the seat element (24) is attached to the electronics unit (26) using at least one bolt (48).

11. The seat assembly (22) of claim 9 or 10, further comprising a spacer part (28) wherein the spacer part (28) is interposed between the electronics unit (26) and the seat element (24).

12. A vehicle (10) comprising
a traction battery (12) and
an electronics unit (26) according to any one of claims 1 to 8 and/or a seat assembly (22) according to any one of claims 9 to 11,
wherein the electronics unit (26) and/or the seat assembly (22) is electrically and/or communicatively coupled to the traction battery (12).

13. The vehicle (10) of claim 12, wherein the traction battery (12) comprises a plurality of battery cells (14) arranged in a battery cell housing (16), wherein the battery cell housing (16) forms at least a part of a vehicle floor.

14. The vehicle (10) of claim 12 or 13, wherein the traction battery (12) is a structural battery.

15. A use of an electronics unit (26) for a traction battery (12) of a vehicle (10) for attaching a seat element (24) inside the vehicle (10).

## Amended claims

### Amended claims in accordance with Rule 137(2) EPC.

1. An electronics unit (26) for a traction battery (12) of a vehicle (10), the electronics unit (26) comprising
a housing (30) and
at least one electronic control component (35) and/or at least one power electronics component (37) arranged inside the housing (30),
wherein a mechanical connection interface (44) for mechanically attaching a seat element (24) is provided on the housing (30),
**characterized in that** the electronics unit (26) further comprises a mechanical support structure (56) configured to support loads originating from the seat element (24), wherein the mechanical support structure (56) is arranged inside the housing (30), and wherein the mechanical support structure (56) comprises the at least one electronic control component (35) and/or the at least one power electronics component (37).

2. The electronics unit (26) of claim 1, wherein the mechanical connection interface (44) comprises at least one hole (46) configured to receive a bolt (48) and/or at least one bolt (48) configured to be received in a hole provided on the seat element (24).

3. The electronics unit (26) of claim 1 or 2, wherein the housing (30) comprises an upper housing part (34) and a lower housing part (32),
wherein the mechanical connection interface (44) is provided on the lower housing part (32) and/or on the upper housing part (34).

4. The electronics unit (26) of any one of the preceding claims, wherein the power electronics component (37) comprises an electric converter unit (38) and/or a switching unit (40).

5. The electronics unit (26) of any one of the preceding claims, further comprising an electric connection interface (42) configured to connect the at least one electronic control component (35) and/or the at least one power electronics component (37) to a battery cell (14) of the traction battery (12).

6. The electronics unit (26) of any one of the preceding claims, wherein at least one battery cell (14) of the traction battery is located in the housing (30).

7. A seat assembly (22) for a vehicle (10), comprising a seat element (24) and an electronics unit (26) according to any one of the preceding claims, wherein the seat element (24) is attached to the electronics unit (26) via the mechanical connection interface (44) of the electronics unit (26).

8. The seat assembly (22) of claim 7, wherein the seat element (24) is attached to the electronics unit (26) using at least one bolt (48).

9. The seat assembly (22) of claim 7 or 8, further comprising a spacer part (28) wherein the spacer part (28) is interposed between the electronics unit (26) and the seat element (24).

10. A vehicle (10) comprising
a traction battery (12) and
an electronics unit (26) according to any one of claims 1 to 6 and/or a seat assembly (22) according to any one of claims 7 to 9,
wherein the electronics unit (26) and/or the seat assembly (22) is electrically and/or communicatively coupled to the traction battery (12).

11. The vehicle (10) of claim 10, wherein the traction battery (12) comprises a plurality of battery cells (14) arranged in a battery cell housing (16), wherein the battery cell housing (16) forms at least a part of a vehicle floor.

12. The vehicle (10) of claim 10 or 11, wherein the traction battery (12) is a structural battery.

13. A use of an electronics unit (26) according to any one of claims 1 to 6 for a traction battery (12) of a vehicle (10) for attaching a seat element (24) inside the vehicle (10).
